Europäisches Patentamt

European Patent Office

Office européen des brevets

(19)

(11) Numéro de publication: **0 094 275**
**A1**

(12) **DEMANDE DE BREVET EUROPEEN**

(21) Numéro de dépôt: **83400775.9**

(51) Int. Cl.³: **C 25 C 1/20**

(22) Date de dépôt: **19.04.83**

(30) Priorité: **30.04.82 FR 8207690**

(71) Demandeur: **Martineau, Jean Pierre, 59 Route d'Espagne, F-31120 Portet sur Garonne (FR)**

(43) Date de publication de la demande: **16.11.83 Bulletin 83/46**

(72) Inventeur: **Martineau, Jean Pierre, 59 Route d'Espagne, F-31120 Portet sur Garonne (FR)**

(84) Etats contractants désignés: **AT BE CH DE FR GB IT LI LU NL SE**

(74) Mandataire: **Ravina, Bernard, 24, boulevard Riquet, F-31000 Toulouse (FR)**

(54) **Dispositif pour la récupération électrolytique en continu de métaux contenus dans des bains de traitement des machines à développer des surfaces sensibles.**

(57) Dispositif pour la récupération électrolytique en continu de métaux contenus dans des bains de traitement des machines à développer des surfaces sensibles.

La présente invention concerne un dispositif pour la récupération électrolytique en continu de métaux contenus dans des bains de traitement des machines à développer des surfaces sensibles.

Le dispositif selon l'invention comprend un circuit d'alimentation (2) entre une machine à développer (1) et une cuve électrolytique (3) pourvue d'une cathode rotative (3A) et d'au moins une anode fixe (3B), un circuit de recyclage (4) entre la cuve électrolytique (3) et la machine à développer (1) et un circuit d'évacuation (5) de liquide de traitement régénéré à l'égout, le dit dispositif se caractérise essentiellement en ce que le circuit d'alimentation (2) est doté d'une cuve de stockage (6) de liquide de traitement usagé et d'une pompe (7) pour la vidange de la dite cuve, en ce que le circuit de recyclage (4) comporte deux filtres (8) et (9) et une pompe (10) dite doseuse placée entre ces deux filtres et apte à prélever dans la cuve électrolytique (3) une quantité prédéterminée de liquide de traitement régénéré et en ce que sur le circuit d'évacuation (5) sont montés une pompe (11) de vidange de la cuve électrolytique (3) et un élément de filtrage.

0094275

DISPOSITIF POUR LA RECUPERATION ELECTROLYTIQUE EN CONTINU DE METAUX CONTENUS DANS DES BAINS DE TRAITEMENT DES MACHINES A DEVELOPPER DES SURFACES SENSIBLES.

La présente invention concerne un dispositif pour la récupération électrolytique en continu de métaux contenus dans des bains de traitement de machines à développer des surfaces sensibles.

La récupération de métaux est réalisée dans un milieu électrolytique puis une partie du liquide de traitement régénéré par l'électrolyse est recyclée vers la machine à développer, l'autre partie de ce liquide étant évacuée à l'égout.

Les dispositifs aptes à assurer de telles opérations sont connus. Mais la plupart d'entre eux ne peuvent fonctionner en continu car le trop plein de liquide de traitement usagé arrive directement dans la cuve électrolytique.
Il n'est donc pas possible de continuer les opérations de développement dans la machine à développer tant que la cuve électrolytique n'est pas vide.

Si la cuve de liquide de traitement déborde, l'ensemble de ce liquide ne subit pas un temps d'électrolyse égal, ce qui entraîne que la concentration en métal dans le liquide de traitement recyclé n'est jamais la même et implique des qualités de développement inégales.

Ces dispositifs sont dotés de manière connue d'un circuit d'évacuation de liquide régénéré vers l'égout.
Mais cette évacuation est réalisée par débordement de la cuve électrolytique, et lorsque le liquide de traitement usagé arrive dans la cuve électrolytique, la turbulence régnant dans celle-ci entraîne du liquide de traitement non encore électrolysé dans le circuit d'évacuation, lequel ne possède pas de moyens de filtrage aptes à éviter le passage des métaux polluants dans les eaux usées.

De plus, avec une évacuation à l'égout par trop plein les proportions prédéterminées entre le liquide de traitement régénéré recyclé et le liquide de traitement régénéré évacué à l'égout sont difficilement

respectés.

De ce fait, la quantité de liquide de traitement neuf apportée à la machine à développer est toujours approximative et la concentration en métaux dans le liquide usagé est toujours différente, il faut par conséquent la mesurer et régler le temps d'électrolyse en fonction de cette concentration et de la quantité de liquide usagé introduit dans la cuve électrolytique.

La présente invention obvie à ces inconvénients en utilisant des moyens permettant d'électrolyser toujours la même quantité de liquide de traitement usagé, de recycler et d'évacuer le liquide régénéré toujours dans les mêmes proportions sans que la quantité du liquide de traitement soit altérée.

A cet effet, le dispositif selon l'invention comprenant un circuit d'alimentation 2 entre une machine à développer 1 et une cuve électrolytique 3 pourvue d'une cathode rotative 3A et d'au moins une anode fixe 3B, un circuit de recyclage 4 entre la cuve électrolytique et la machine à développer 1 et un circuit d'évacuation 5 de liquide de traitement régénéré à l'égout se caractérise essentiellement en ce que le circuit d'alimentation 2 est doté d'une cuve de stockage 6 de liquide de traitement usagé et d'une pompe 7 pour la vidange de la dite cuve, en ce que le circuit de recyclage 4 comporte deux filtres 8 et 9 et une pompe 10 dite doseuse placée entre ces deux filtres et apte à prélever dans la cuve électrolytique 3 une quantité prédéterminée de liquide régénéré et en ce que sur le circuit d'évacuation 5 sont montés une pompe 11 de vidange de la cuve électrolytique 3 et un élément de filtrage.

D'autres avantages et caractéristiques apparaîtront à la lecture de la description et en se référant aux dessins annexés donnés à titre d'exemples non limitatifs en lesquels :

- La figure 1 est une vue schématique du dispositif selon l'invention,

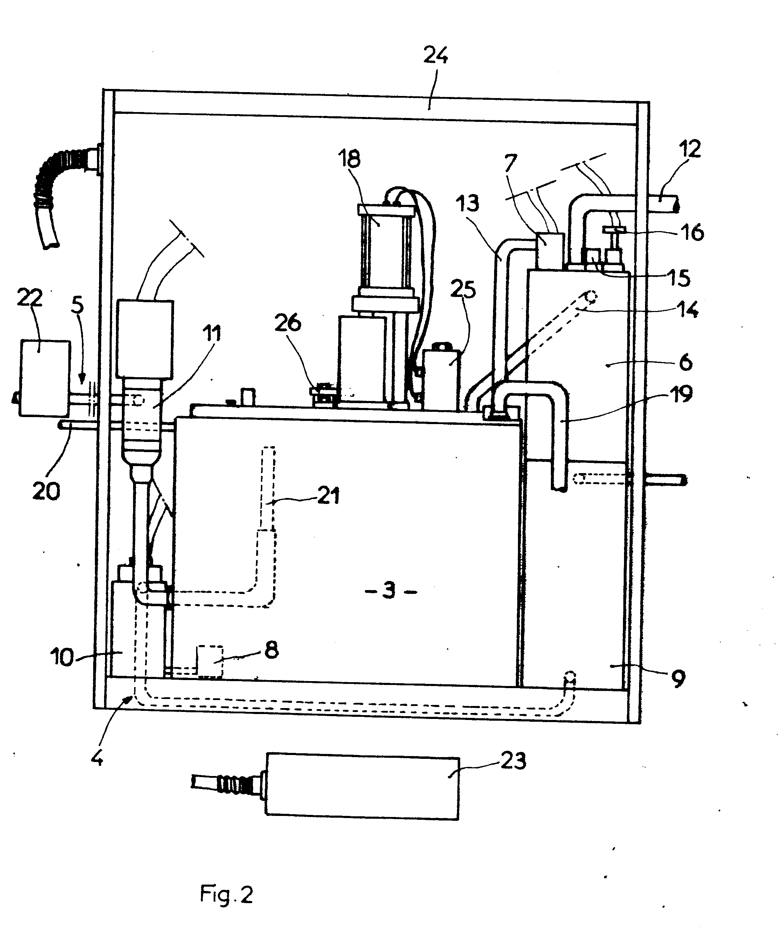

- La figure 2 est une vue de face du dispositif,
- La figure 3 est une vue en coupe de la cuve de stockage du dispositif selon l'invention.

La présente invention concerne un dispositif électrolytique pour la récupération de métaux contenus dans des bains de traitement de machines à développer.

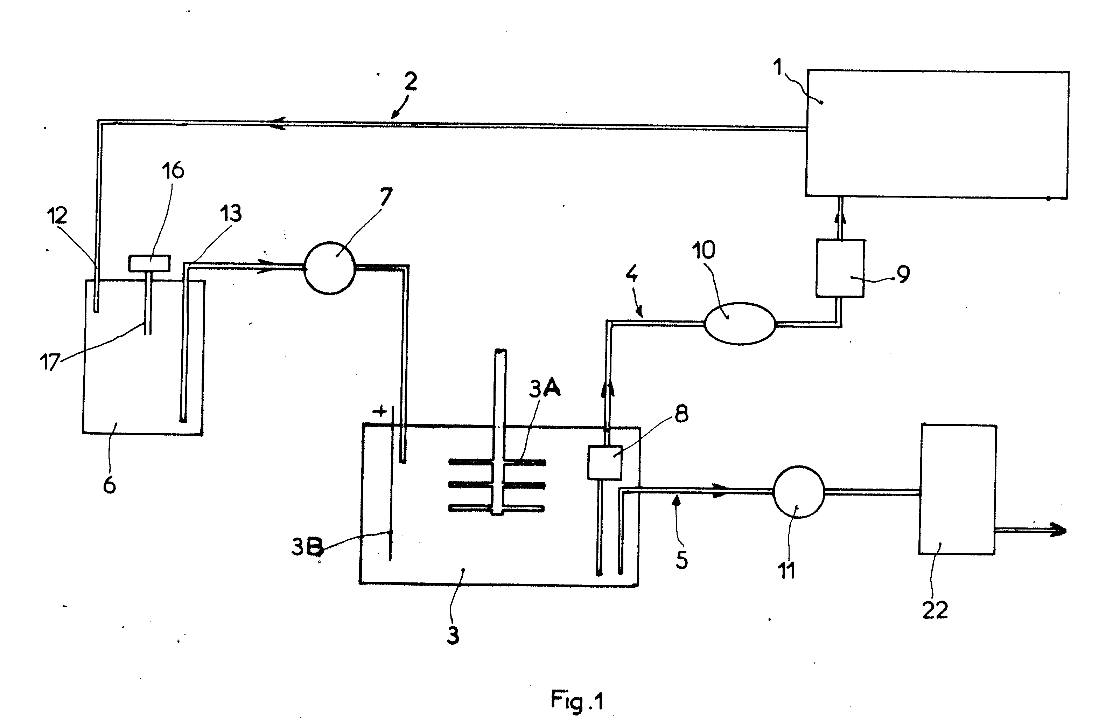

Comme représenté schématiquement en fig.1, le dispositif pour la récupération de métaux, notamment de sels d'argent contenus plus particulièrement dans les bains de fixation d'une machine à développer 1 comprend un circuit d'alimentation 2 entre la machine à développer 1 et une cuve électrolytique 3 pourvue d'une cathode rotative 3A et d'au moins une anode fixe 3B, un circuit de recyclage 4 entre la cuve électrolytique 3 et la machine à développer 1 et un circuit d'évacuation 5 de liquide de traitement régénéré à l'égout, le dit dispositif se caractérise essentiellement en ce que le circuit d'alimentation 2 est doté d'une cuve de stockage 6 de liquide de traitement usagé et d'une pompe 7 pour la vidange de la dite cuve, en ce que le circuit de recyclage 4 comporte deux filtres 8 et 9 et une pompe dite doseuse placée entre les deux filtres et apte à prélever dans la cuve électrolytique 3 une quantité prédéterminée de liquide de traitement régénéré et en ce que sur le circuit d'évacuation 5 sont montés une pompe 11 de vidange de la cuve électrolytique 3 et un élément de filtrage.

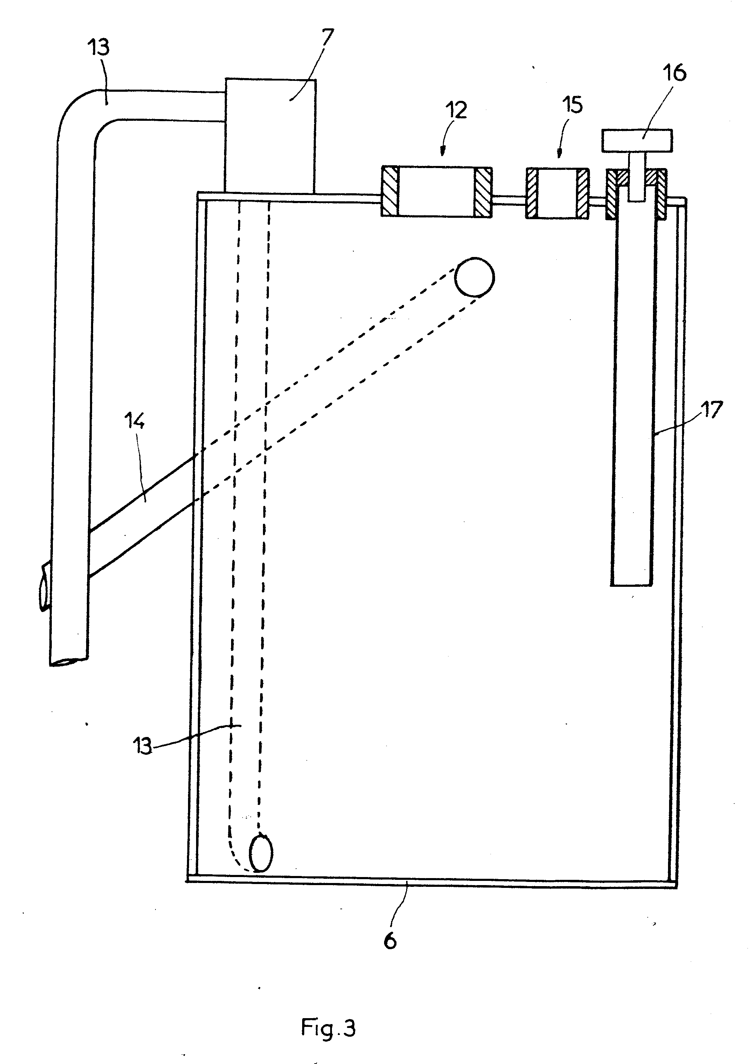

La cuve de stockage 6 du dispositif selon l'invention reçoit l'excédent de liquide de traitement usagé provenant, par gravité, de la machine à développer 1.
La dite cuve de stockage 6 selon un mode de réalisation est de forme cylindrique et comprend dans sa partie haute représentée en fig.3 une arrivée 12 de liquide de traitement usagé, une canalisation 13 de vidange, une canalisation 14 d'évacuation de trop plein, une ouverture 15 de mise à l'air libre et un élément apte à déclencher la vidange de la cuve de stockage dans la cuve électrolytique 3.

Les canalisations sur l'ensemble du dispositif sont en une matière résistante aux liquides corrosifs et leurs raccords sur les différents éléments constitutifs de la machine sont réalisés de manière connue de l'homme de l'art.

L'élément apte à déclencher la vidange de la cuve de stockage 6 est de préférence un pressostat 16 délivrant une impulsion lorsque le liquide

de traitement usagé atteint une quantité prédéterminée réglable dans la dite cuve et permettant la mise en route de la pompe de vidange 7.

Le pressostat 16 est fixé de toute manière connue à l'extrémité supérieure d'un tube 17 plongeant dans la cuve de stockage 6 de telle manière que lorsque le niveau de liquide augmente dans la cuve de stockage 6, il réside dans le tube 17 une pression apte à créer une impulsion sur le pressostat 16.
La valeur de cette pression dépend de la quantité de liquide introduit dans la cuve de stockage et peut être réglée en réglant la pression de consigne sur le pressostat afin d'obtenir la quantité de liquide de traitement désirée.

L'impulsion délivrée par le pressostat 16 permet la mise en route de la pompe 7 de vidange qui est placée de manière connue sur la canalisation 13 de vidange reliant la cuve de stockage 6 à la cuve électrolytique 3.
La pompe 7 de vidange est de préférence à grand débit de manière à ce que la vidange de la cuve de stockage se fasse rapidement.

Sur le côté de la partie haute de la cuve de stockage est placée la canalisation 14 d'évacuation de trop plein de la dite cuve.
Cette canalisation 14 permet en cas de panne d'un des éléments liés à la cuve de stockage 6 d'amener directement l'excédent de liquide de traitement usagé dans la cuve électrolytique 3 afin qu'il n'y ait pas de perte du dit liquide.
De préférence l'impulsion délivrée par le pressostat 16 déclenche parallèlement à la pompe 7 l'électrolyse dans la cuve électrolytique 3.
La cuve de stockage 6 est vidangée en un temps très bref dans la cuve électrolytique 3 afin que l'ensemble du liquide de traitement usagé subisse sensiblement la même durée d'électrolyse.

Selon une autre forme de réalisation, l'impulsion crée par le pressostat 16 ne déclenche que la pompe de vidange 7.
Lorsque celle-ci s'arrête après une durée de fonctionnement déterminée la cathode 3A est entraînée en rotation et l'électrolyse démarre dans la cuve électrolytique 3.

0094275

Le temps de remplissage de la cuve de stockage 6 est tel qu'il n'est pas possible qu'une impulsion soit créée au niveau du pressostat tant que la quantité de liquide de traitement déversée dans la cuve électrolytique au cours du cycle précédent n'a pas été totalement recyclée et/ou évacuée.

La cuve électrolytique 3 affecte préférentiellement la forme d'un parallèlépipède et est fermée en sa partie supérieure.
Cette partie comporte sur ses côtés de préférence deux ouvertures pour le passage de deux anodes 3B et en sa partie centrale un moteur 18 entraînant une cathode rotative 3A dans la cuve 3 afin que l'électrolyse se fasse en milieu turbulent.
La vitesse de rotation de la cathode 3A est sensiblement de 100 tours/minute et le courant d'électrolyse utilisé varie entre 0 et 15 ampères.
L'intensité de ce dernier est réglable à partir d'un ampèremètre placé près du moteur 18.
La partie supérieure comporte aussi un boîtier 25 de branchement électrique pour le moteur, des éléments électriques liés au fonctionnement du moteur tel qu'un charbon 26, des emplacements pour les connexions des électrodes.

Selon l'invention, tous les organes disposés sur la partie supérieure de la cuve électrolytique 3 sont isolés et protégés afin qu'ils ne soient pas attaqués par des projections de liquide corrosif.
La cuve électrolytique est dotée d'une mise à l'air libre 19 et d'une sécurité de débordement 20 reliée directement à l'égout ainsi que d'un élément permettant la vidange totale tel qu'un robinet.

Avant la mise en fonctionnement du dispositif, la cuve électrolytique 3 est remplie de liquide de traitement jusqu'à une certaine hauteur afin que les électrodes soient toujours immergées.
Lorsque le liquide de traitement usagé arrive de la cuve de stockage 6 dans la cuve électrolytique 3, l'électrolyse débute.
Quand le temps d'électrolyse est écoulé une partie du liquide régénéré est recyclée vers la machine à développer 1 par le circuit de recyclage 4.

Le recyclage est effectué par la pompe doseuse 10 qui est apte à assurer le pompage d'une quantité de liquide déterminée réglable, le réglage de cette pompe est effectué en fonction du seuil de déclenchement du pressostat 16, donc en fonction de la quantité déversée dans la cuve électrolytique 3.

La quantité du liquide régénéré recyclée vers la machine à développer est donc proportionnelle à la quantité du liquide usagé déversée dans la cuve électrolytique 3 avant électrolyse.

Le circuit de récyclage 4 comprend un filtre à résine synthétique par exemple à polypropylène 3 et un filtre à matière minérale 9 par exemple à charbon actif, placé avant l'entrée du liquide de traitement dans la machine à développer.

Le filtre en polypropylène 8 débarrasse le liquide de traitement régénéré des particules solides qu'il contient tels que la gélatine provenant des surfaces sensibles traitées par la machine à développer 1. Ce filtrage permet de garder une bonne qualité du liquide de traitement régénéré et d'éviter l'encrassement de la pompe doseuse 10.

Le filtre à charbon actif 9 permet la décoloration du liquide avant son recyclage dans la machine à développer 1.

En général ce liquide est du fixateur, celui-ci comporte des traces de révélateur lorsqu'il pénètre dans le dispositif.

Le révélateur lors de l'electrolyse s'oxyde et donne au fixateur régénéré une couleur jaunafre.

Le filtre à charbon actif 9 décolore donc le fixateur régénéré.

L'action de ces deux filtres permet de recycler dans la machine à développer du liquide limpide, débarrassé de particules nuisibles et dont les propriétés ne sont pas altérées.

Entre les deux filtres est montée de manière connue la pompe doseuse 10 à débit réglable du type à piston à hauteur réglable actionné par un moteur asynchrone.

Le piston est réglable en hauteur dans le but d'assurer le pompage de différentes quantités de liquide selon la quantité de liquide de traitement usagé déversée dans la cuve électrolytique pendant le fonctionnement du dispositif.

Selon un mode d'agencement préférentiel, le filtre en polypropylène 8 est placé dans le fond de la cuve électrolytique 3, la pompe doseuse 10 est située à proximité de celle-ci et le filtre à charbon actif 9 est placé sous la cuve de stockage 6 pour des raisons d'encombrement et après la pompe doseuse 10 selon le chemin parcouru par le liquide pour des raisons de facilité de montage.

Lorsque la pompe doseuse 10 a recyclé le liquide de traitement régénéré en une quantité prédéterminée celle-ci s'arrête et la pompe 11 du circuit d'évacuation est mise en route pour évacuer à l'égout le reste de la quantité de liquide déversée dans la cuve électrolytique 3 provenant de la cuve de stockage 6.

Le circuit d'évacuation 5 est doté d'une canalisation 21 recourbée verticalement vers le haut dans la cuve électrolytique 3 et de hauteur réglable afin de maintenir pratiquement constant le niveau de liquide de traitement dans la cuve électrolytique 3 afin que les électrodes 3A et 3B de celles-ci soient toujours immergées dans le dit liquide.

Lorsque une partie du liquide de traitement déversé dans la cuve électrolytique 3 est recyclé dans la machine à développer 1 l'extrémité de la canalisation 21 du circuit d'évacuation 5 est située à une certaine distance sous le niveau de liquide de traitement.

Cette distance donne le volume de liquide restant à évacuer.

Celle-ci varie en fonction de la quantité de liquide de traitement recyclé et en fonction de la hauteur de la canalisation 21 d'évacuation.

Afin de maintenir constantes les proportions de liquide recyclé et de liquide évacué, la canalisation 21 est réglable en hauteur.

Le réglage en hauteur est réalisé en faisant coulisser la partie supérieur de la portion verticale de la canalisation 21 dans la partie inférieure de cette même portion.

Il est évident pour l'homme de l'art que la partie inférieure de la portion verticale de la canalisation 21 comprend des moyens de guidage de la partie supérieure de la dite portion verticale et des éléments d'étanchéïté entre ces deux parties.

Selon un exemple de réalisation, le réglage en hauteur de la canalisation 21 est effectué avant la mise en fonctionnement du dispositif et

lors du déversement de liquide de traitement utilisé pour maintenir les électrodes immergés.

Suivant un exemple de réalisation préférentiel, le réglage est effectué à partir d'une ouverture ménagée dans la partie supérieure de la cuve électrolytique 3, par laquelle passe une tige solidaire de la canalisation 21 permettant lorsqu'elle est tirée ou poussée de régler la hauteur de la dite canalisation.
Ce réglage permet donc de respecter précisément les proportions prédéterminées entre le liquide recyclé et le liquide régénéré.

L'évacuation à l'égout est réalisée par la pompe 11 montée de manière connue sur le circuit d'évacuation 5.
Celui-ci est doté d'un élément de filtrage. Le dit élément de filtrage est un filtre échangeur d'ions 22.
De préférence, l'échangeur d'ions 22 est celui décrit dans le brevet N° 69.03508 déposé au nom du présent inventeur.
Ce filtre permet de récupérer les particules métalliques résiduelles qui n'ont pas été retenues sur les électrodes lors de l'électrolyse, ceci dans le but d'évacuer à l'égout un liquide de traitement exempt de métaux susceptibles de polluer les eaux usées.

Selon l'invention, les départs et les durées de fonctionnement des diverses pompes et de l'électrolyse sont commandés et réglés à partir d'un programmateur 23 doté de plusieurs temporisations.
Le dit programmateur comporte des signaux lumineux ou autres en vue de la détection de la défaillance d'un des éléments du dispositif.
Ce programmateur permet aux divers éléments du dispositif de fonctionner en cascade.

Il va de soi que la réalisation des opérations successives peut être effectuée par des éléments électromécaniques, électroniques ou autres placés sur les différentes canalisations, pompes et sur les cuves de stockage et d'électrolyse.

Il va de soi que le dispositif comporte une source d'énergie électrique et un ensemble de cablâge.
Les différents éléments et organes constitutifs sont de préférence

0094275

contenus dans une enceinte 24 afin de faciliter la manutention de l'ensemble du dispositif.

D'une manière générale, le liquide de traitement usagé tel que le fixateur est déversé dans la cuve de stockage 6 avec une concentration en argent de 6 à 8 grammes par litres.

Après électrolyse, le fixateur recyclé est introduit dans la machine à développer avec une concentration d'environ 1,5 grammes par litre.

Le fixateur évacué avant de passer dans le filtre échangeur d'ions est chargé de 1 à 2 grammes/litre d'argent après être passé dans le filtre échangeur d'ions, le fixateur ne comporte plus de sels d'argent et n'est donc en aucun cas un produit polluant.

D'autre part, la machine à développer est dotée d'un circuit d'alimentation en liquide de traitement neuf indépendant du dispositif selon l'invention afin que le liquide de traitement puisse garder ses propriétés et donner des qualités de développement toujours égales même après un temps d'utilisation très long.

Le dispositif selon l'invention peut être utilisé comme récupérateur-recycleur ou uniquement comme récupérateur de métaux.

Le dispositif permet de récupérer par électrolyse en continu des métaux contenus dans des bains de traitement de machines à développer et de recycler les liquides des bains de traitement dans des proportions permettant une nette économie de liquide de traitement neuf et de manière très fiable.

Il va de soi que le dispositif selon l'invention peut recevoir tous aménagements et toutes variantes sans pour autant sortir du cadre du présent brevet.

0094275

REVENDICATIONS :

1. Dispositif pour la récupération électrolytique de métaux contenus dans des bains de traitement de machines à développer (1) des surfaces sensibles comprenant un circuit d'alimentation (2) entre la machine à développer (1) et une cuve électrolytique (3) pourvue d'une cathode rotative (3A) et d'au moins une anode fixe (3B), un circuit de recyclage (4) entre la cuve électrolytique (3) et la machine à développer (1) et un circuit d'évacuation (5) de liquide de traitement régénéré à l'égout; dispositif caractérisé en ce que le circuit d'alimentation (2) est doté d'une cuve de stockage (6) de liquide de traitement usagé et d'une pompe (7) pour la vidange de la dite cuve, en ce que le circuit de recyclage (4) comporte deux filtres (8) et (9) et une pompe (10) dite doseuse placée entre ces deux filtres et apte à prélever dans la cuve électrolytique (3) une quantité prédéterminée de liquide de traitement régénéré et en ce que sur le circuit d'évacuation (5) sont montés une pompe (11) de vidange de la cuve électrolytique (3) et un élément de filtrage.

2. Dispositif selon la revendication 1 caractérisé en ce que l'élément de filtrage du circuit d'évacuation (5) est un filtre échangeur d'ions (22).

3. Dispositif selon la revendication 1 caractérisé en ce que la cuve de stockage (6) est dotée dans sa partie haute d'une arrivée (12) de liquide de traitement usagé, d'une canalisation (13) de vidange, d'une canalisation (14) d'évacuation de trop plein, d'une ouverture (15) de mise à l'air libre et d'un élément apte à déclencher la vidange de la dite cuve de stockage (6) dans la cuve électrolytique (3).

4. Dispositif selon les revendications 1,3 et 4 caractérisé en ce que l'élément apte à déclencher la vidange de la cuve de stockage (6) est un pressostat (16) délivrant une impulsion lorsque le liqui-de de traitement usagé atteint une quantité prédéterminée réglable dans la dite cuve et permettant la mise en route de la pompe de vidange (7).

5 . Dispositif selon les revendications 1 et 3 caractérisé en ce que la canalisation (14) d'évacuation de trop plein de la cuve de stockage (6) permet en cas de panne d'un des éléments liés à la dite cuve, d'amener directement l'excédent de liquide de traitement usagé dans la cuve électrolytique (3) afin qu'il n'y ait pas de perte du dit liquide.

6. Dispositif selon la revendication 1 caractérisé en ce que la cuve électrolytique (3) est dotée d'une mise à l'air libre et d'une sécurité de débordement.

7. Dispositif selon la revendication 1 caractérisé en ce que le circuit de recyclage (4) comprend un filtre en polypropylène (8) placé dans la cuve électrolytique (3) et un filtre à charbon actif (9) placé avant l'entrée du liquide de traitement régénéré dans la machine à développer.

8. Dispositif selon la revendication 1 caractérisé en ce que le circuit de recyclage (4) comprend un filtre (8) destiné à retenir les particules solides contenues dans le liquide de traitement régénéré et un filtre (9) destiné à décolorer le liquide régénéré avant son recyclage dans la machine à développer.

9. Dispositif selon les revendications 1 et 8 caractérisé en ce que le filtre (8) est à résine synthétique.

10. Dispositif selons les revendications 1 et 8 caractérisé en ce que le filtre (9) est à matière minérale.

11. Dispositif selon la revendication 1 et 9 caractérisé en ce que le filtre (8) est à polypropylène.

12. Dispositif selon les revendications 1 et 2 caractérisé en ce que le filtre (9) est à charbon actif.

13. Dispositif selon les revendications 1 et 2 ce que le circuit d'évacuation (5) est doté d'une canalisation (21) recourbée verticalement vers le haut dans la cuve électrolytique et de hauteur ré-

0094275

glable afin de maintenir un niveau de liquide de traitement constant
dans la cuve électrolytique (3) afin que les électrodes (3A) et (3B)
de celle-ci soient toujours immergées dans le dit liquide.

14. Dispositif selon les revendications 1,3 et 4 caractérisé
en ce que les départs et les durées de fonctionnement des diverses
pompes et de l'electrolyse sont commandés et réglés à partir d'un
programmateur (20) doté de plusieurs temporisations.

0094275

Fig.1

Fig.2

Fig.3

0094275

## Office européen des brevets

## RAPPORT DE RECHERCHE EUROPEENNE

Numéro de la demande

EP 83 40 0775

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | DE-A-2 502 226 (SCHNORRENBERG) <br> * En entier * | 1,3,6 | C 25 C 1/20 |
| Y | FR-A-2 061 668 (PHOTOGRAPHIC SILVER RECOVERY) <br> * Page 8, revendications 1,4 * | 1,5 | |
| Y | FR-A-2 293 499 (AB. METALL & BERGPRODUKTER) <br> * En entier * | 1,14 | |
| Y | DE-A-2 741 080 (MESSNER) <br> * En entier * | 2 | |
| A | GB-A-2 004 301 (L'ACCESSORIO RADIOGRAFICO) | | **DOMAINES TECHNIQUES RECHERCHES (Int. Cl. ³)** |
| A | FR-A-1 202 688 (COMPTOIR LYON-ALEMAND) | | C 25 C 1 |

----- 

Le présent rapport de recherche a été établi pour toutes les revendications

| Lieu de la recherche <br> LA HAYE | Date d'achèvement de la recherche <br> 12-08-1983 | Examinateur <br> GROSEILLER PH.A. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant